# EUROPEAN PATENT SPECIFICATION

(11) **EP 1 342 298 B1**
(45) Date of publication and mention of the grant of the patent: **22.10.2008**
(21) Application number: 01999992.9
(22) Date of filing: 04.12.2001
(51) Int. Cl.: H01S 3/11

(54) **APPARATUS FOR THE GENERATION OF VARIABLE DURATION LASER PULSES**
VORRICHTUNG ZUR ERZEUGUNG VON LASERIMPULSEN EINSTELLBARER DAUER
APPAREIL POUR GENERER DES IMPULSIONS LASER DE DUREE VARIABLE

(30) Priority: 06.12.2000 IT FI20000246
(43) Date of publication of application: 10.09.2003
(73) Proprietor: CONSIGLIO NAZIONALE DELLE RICERCHE, 00185 Roma (IT)
(72) Inventor: PINI, Roberto, I-50029 Impruneta (IT); SALIMBENI, Renzo, I-50100 Firenze (IT); SIANO, Salvatore, I-50010 Campi Bisenzio (IT)
(74) Representative: Bardini, Marco Luigi
(86) International application number: PCT/IT2001/000612
(87) International publication number: WO 2002/047216

(56) References cited:
- US-A- 5 963 575

## Description

### Field of the invention

The present invention relates to an apparatus for the generation of variable duration laser pulses.

### Description of the prior art

As is well known, at present it is not possible to substantially alter the parameter of the emission duration of lasers operating in a high-gain regime. The pulse duration is determined by the time taken to amplify the light radiation during repeated forward and backward passages within the optical cavity. In the case of a high-gain laser, either due to the intrinsic characteristics of the active laser medium or because such high gain is induced with appropriate optical shutters that determine the so-called "Q-switching" mode, the laser amplification and therefore also the gain saturation are obtained after just a few passages of the radiation within the cavity. Bearing in mind that the typical length of the optical cavity is of the order of one metre, the duration of the pulses emitted in such high-gain conditions does not generally exceed about ten or, at best, a few tens of nanoseconds. In any case, once the cavity structure and the type of active medium have been determined, it is not generally possible to modify the duration of the individual pulses emitted by the system.

By way of example one may here cite the case of the Neodymium:YAG laser, which represents the most widely used among the solid state lasers employed for industrial and biomedical applications. This device can operate in two distinct and alternative emission regimes: 1) in the Q-switching mode, as described above, by means of a shutter which produces pulses lasting 5-10 nanoseconds; 2) in the so-called "free running" mode, i.e. without a shutter, with pulse durations of the order of 0.2-1 milliseconds and substantially determined by the switch-on time of the flash bulb that pumps the laser medium. As far as this class of lasers is concerned, it should be noted that no technological solutions are at present known capable of producing laser emission of variable duration in the time range comprised between these two extremes.

On the other hand there exist applications of laser technique in which the possibility of varying the pulse duration also within said time range would be particularly advantageous. A typical case of this kind is constituted by the so-called "photoablation" methods of surface treatment, where the term "photoablation" is to be understood as referring to the removal of material from a surface by means of the action of a high-power pulsed laser. These methods are extensively used in such procedures as cleaning, paint stripping and removal of deposits and surface layers both in the field of the restoration of works of art and monuments and in industrial and medico-surgical fields.

The final effect exerted on the surface finish of the material treated by means of photoablation processes is strongly dependent on the duration of the laser pulse. In this connection, at least as far as stony materials are concerned, reference can be made to S. Siano et al., "Cleaning process of encrusted marbles by Nd:YAG lasers operating in free running and Q-switching modes", Applied Optics Vol. 36, pp. 7073-7079, 1997. For example, whereas rather brief durations have to be employed for the cleaning of metals, typically of the order of less than a microsecond, in order to minimize a possible damage to the substrate as a result of the high thermal conductivity of these materials, brief pulses have to be avoided in the case of stony materials, because they could induce local photomechanical effects (shock waves associated with high instantaneous pressure peaks) capable of causing microfragmentation and appreciable roughness of the cleansed surface.

It also has to be borne in mind that in the case of laser systems operating in the Q-switching mode there exists a problem when the pulses they generate have to be transmitted in optical fibres. Indeed, given pulses with a duration of the order of tens of nanoseconds and energies of the order of hundreds of mJ, as necessary for the above cited applications, the power density that comes to be coupled to the fibre (which typically has a diameter of the order of one millimetre) is close to and possibly even greater than the critical value at which the fibre begins to suffer damage. It is therefore necessary to employ such alternative transmission systems as articulated arms, but these are less manoeuvrable than optical fibre cables and, in any case, limit the operating range of the system to a range of 1.0-1.5 metres from the body of the laser.

US-A-5963575 discloses a Q-switched laser system comprising an optical cavity delimited by a total reflection mirror and a partial reflection mirror, and an active material with excitation system. The passive Q-switching acts as an optical shutter capable of inducing a Q-switching mode. The resonator comprises an extension device in the form of an optical waveguide for increasing the laser pulse length consisting of an optical fiber.

### Summary of the invention

The present invention therefore is directed to provide a laser apparatus that will make it possible to vary the duration of the laser pulses in accordance with each specific application.

A particular object of the present invention is to provide a laser apparatus of the aforementioned type that will make it possible to optimise high-precision laser working processes in which the efficacy of the treatment and its non-harmfulness depend on the control of the pulse duration.

Yet another object of the present invention is to provide a laser apparatus of the aforementioned type that will make it possible for the generated pulses to be transmitted by means of an optical fibre cable.

These objects are attained with the apparatus for the generation of laser pulses in accordance with the present invention, of which the essential characteristics are set out in Claim 1 hereinbelow. Further important characteristics of the apparatus in accordance with the present invention are specified in the dependent claims.

According to one aspect of the present invention there is provided a pulsed laser having a variable length optical resonator and, more specifically, that render variable the distance between the total reflection mirror and the partial reflection mirror so as to delimit the optical cavity, this with a view to generating laser pulses of a variable duration. To this end, the duration of the emitted pulses is varied in discrete steps by means of a device that enables variation of the resonator length by means of interchangeable optical fibre sections of different lengths that are selectively introduced into the optical cavity upon an appropriate command from the operator.

### Brief description of the drawings

The characteristics and advantages of the apparatus for the generation of variable duration laser pulses in accordance with the present invention will be brought out more clearly by the description given hereinbelow of a particular embodiment thereof, which is to be considered as an example and not limitative in any way, said description making reference to the attached drawings of which:
- Figure 1 shows a schematic diagram illustrating the principle of the apparatus in accordance with the invention;
- Figure 2 schematically illustrates a possible system for controlling the positioning of the optical fibre sections;
- Figure 3 illustrates another possible embodiment of the control system for positioning the optical fibre sections;
- Figures 4, 5 and 6 illustrate laser pulses of different duration that can be obtained when the resonator length is varied by means of the apparatus in accordance with the invention (the ordinates of the curves are in arbitrary units);
- Figure 7 schematically shows an oscillator-amplifier assembly realized with the apparatus in accordance with the invention.

### Detailed description of the invention

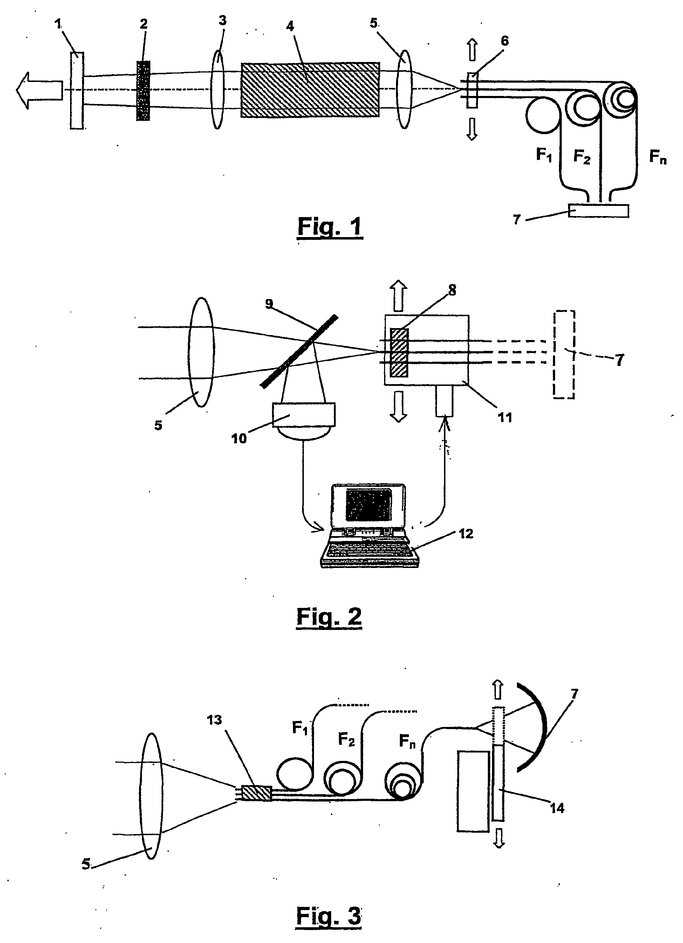

Referring to Figure 1, the reference number 1 has been used to indicate a partially reflecting output mirror that permits the radiation to be coupled with the outside, while 7 indicates a total reflection rear-end mirror. Mirrors 1 and 7 delimit the optical resonator or optical cavity of the apparatus in the proper sense of these terms, i.e. the resonator or cavity within which there is placed an active material 4 that produces the laser action, a neodymium:YAG crystal for example, and the excitation system associated therewith, though the latter, being of a type known to a person skilled in the art, is not here shown in detail. The reference number 2 identifies an optical shutter that induces the Q-switching mode, of a passive type, an LiF:F₂- crystal for example. A lens 3 located between active material 4 and shutter 2 makes it possible to vary the energy density per unit area on the surface of the crystal by varying the diameter of the beam passing through the shutter, this with a view to adjusting the threshold and therefore the time lag during which the crystal becomes optically transparent rather than optically absorbing, thereby enabling the laser to oscillate in the cavity. Shutters of a different type can obviously be employed, including electro-optical and acousto-optical shutters, all well known to a person skilled in the art, but the solution envisaged in the present embodiment does in any case constitute a simplification of the apparatus, because it does not require the use of feed and control systems as would be the case if active shutters were to be employed.

The output ends of several (three in the present embodiment of the invention) optical fibre sections of different lengths are situated in front of the total reflection mirror 7 that closes the optical cavity, said section being identified by F₁, F₂ and Fₙ in Figure 1. The input end of each of these optical fibre sections is connected to a device 6 that makes it possible for these sections to be individually selected by bringing them, one at a time, to the focal point of a lens 5 with antireflection treatment that constitutes the optical system for coupling the laser radiation with a particular optical fibre.

Figure 2 shows a possible embodiment of the activation device 6 that envisages the use of a high-precision electromechanical displacement unit 11 constituted, for example, by a stage with a linear resolution of 10 micron that is operated either by a step motor or a direct current motor with zero reference, like Model MT-65 of MICOS GmbH or equivalent, controlled by a microprocessor 12. Rigidly connected with this unit is an item of equipment 8 to which there are secured the input ends of the various optical fibres, so that the input face of each of these fibres can be brought to the focal point of coupling lens 5 as and when required. The fibres can be fixed to the item of equipment 8 by means of a connector of the standard SMA type in which the SMA receptacle of each fibre is made integral to said item of equipment 8, while the input end of the fibre terminates with the appropriate male SMA connector.

Displacement device 11 may be provided with a feedback control system for centering the fibre at the focal point and consisting, for example, of a beam splitter in the form of a partially reflecting plate 9 inserted between lens 5 and displacement device 11 and inclined at 45° with respect to the optical axis, where the said plate intercepts a minimal fraction of the beam issuing from the optical fibre and sends it to a measuring instrument 10, possibly a calibrated photodiode, to check the energy content. The read value is recorded by microprocessor 12, which also compares it with the previous position and, using successive adjustment cycles, maximizes the energy value and, correspondingly, optimizes the centering of the fibre on the optical axis of the system by controlling the movement of the displacement device.

According to another possible embodiment of the activation device of the individual fibres that is shown in Figure 3, the input ends of the optical fibres remain fixed with respect to each other and the fibres are illuminated simultaneously. To this end the embodiment uses lens 5 to realize a rather wider focus than in the previous case and the optical fibres are assembled into a compact bundle - identified in the figure by the reference number 13 - in such a manner as to enable each input end to collect more or less the same radiation fraction. The selection of the individual fibres is then obtained by means of a shutter 14 placed between the output end of each fibre and the total reflection rear-end mirror 7. In the embodiment illustrated by Figure 3 the shutter 14 is realized by means of a servo-controlled actuator that places an optical block against the output end of the fibre. In this case the rear mirror 7 is spherical and concave to maximize the backward coupling in the fibre and allow the insertion of the shutter.

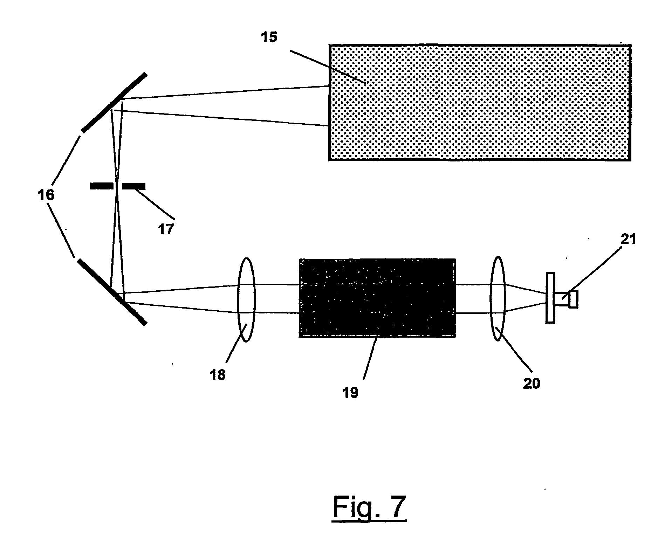

As will be clear to a person skilled in the art, the apparatus in accordance with the invention may be employed as an oscillator in a laser equipment layout of the oscillator-amplifier type realized for the purpose of substantially increasing the energy of the emitted radiation. In such an arrangement, illustrated by Figure 7, the amplifier 19 is constituted by a further Nd:YAG module of a standard type, while the reference number 15 indicates the apparatus according to the invention, which here acts as the oscillator. Blocks 15 and 19 are coupled in the conventional manner by means of an optical system consisting of two facing total reflection mirrors 16 arranged at 45° with respect to the optical axes of the two blocks and a pinhole 17 on the optical path between these two mirrors to block undesired components of the laser beam, as well as a lens 18 downstream of the mirrors to concentrate the beam onto amplifier 19. Yet another lens 20 is provided downstream of amplifier 19 to couple the beam into the optical fibre by means of an optical fibre connector 21.

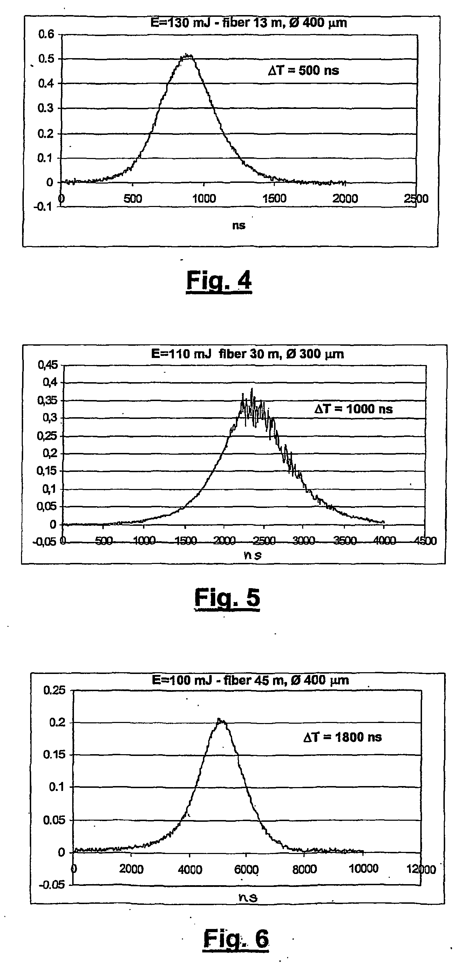

The time patterns of some pulses obtainable by means of the apparatus in accordance with the invention are included herewith by way of example. Figures 4, 5 and 6 show laser pulses having durations of, respectively, 500, 1000 and 1800 nanoseconds (at half-height) corresponding to a cavity length modified by means of the successive insertion of optical fibres having lengths of, respectively, 13, 30 and 45 metres and a core diameter comprised between 300 and 400 micron. The energies of these pulses are greater than 100 mJ and are already suitable for many applications in the material cleansing sector. If necessary, the emission can be further increased, up to one Joule per pulse and even more, by including an additional laser amplification stage, as already mentioned earlier on.

Lastly, should it be desired to work with pulses having an even longer duration than can be obtained with the different lengths of optical fibres here employed, crystal 2 producing the passive Q-switching effect may be removed to obtain a "free running" mode emission with typical durations of the order of one millisecond. This can be realized by means of a simple actuator controlled from the outside, because the alignment of crystal 2 within the laser cavity is not as critical as the alignment of all the other optical components.

The apparatus for the generation of variable duration laser pulses in accordance with the invention fully achieves the stated objects of the invention. Thanks to the possibility of varying the length of the optical path of the resonator, obtainable by means of simple modifications of the basic stricture of a laser apparatus, it becomes possible to generate laser pulses of variable duration and this, in turn, makes it possible to optimize the operating mode of the apparatus for specific and different employment conditions. Furthermore, since variations of the pulse duration make it possible to reduce the power density in the optical fibre, the laser pulses can be transmitted by means of optical fibre cables without incurring in the risk of damaging these cables. Since laser transmission in optical fibres becomes problematical only for pulse durations of the order of 10 ns or less, it should be noted that the lengthening of the pulse duration to more than 100 ns obtained by means of the insertion of optical fibres into the laser cavity avoids the possibility of damage being suffered by the optical fibres either within or outside the cavity.

These and other variations and/or modifications can be introduced into the apparatus for the generation of variable duration laser pulses in accordance with the present invention without departing from the scope of the invention as defined by the appended claims.

## Claims

1. Apparatus for the generation of laser pulses comprising an optical cavity delimited by two mirrors, one of the mirrors being a total reflection mirror (7) and the other a partial reflection mirror (1), and containing an active medium (4) complete with an appropriate excitation system, an optical shutter (2) capable of inducing a Q-switching mode being provided between said total reflection mirror and said active medium, **characterized in that** a plurality of optical fibers sections (F₁, F₂, ... Fₙ) of different lengths are provided for optically coupling said active medium (4) to said total reflection mirror (7), an actuation device (6) being further provided for selectively interchanging said fiber lengths in the optical path, so that the length of the laser cavity can be selected when the laser operates in Q-switching mode, consequently varying also the length of the laser pulse.

2. Apparatus in accordance with claim 1, wherein said optical fibre sections comprise output ends situated in front of total reflection mirror (7) and input ends arranged at the focal point of a lens (5) coupling them with said active medium (4).

3. Apparatus in accordance with claim 2, wherein said actuation device (6) comprises means (11) for selectively centering one of the input ends of said optical fibre sections at the focal point of said coupling lens (5), said means comprising a support (8) of said ends connected to a motor-operated stage.

4. Apparatus in accordance with claim 3, wherein said motor-operated stage is driven by a feedback control (9, 10, 12).

5. Apparatus in accordance with claim 4, wherein said feedback control comprises a beam splitter (9) arranged at 45° with respect to the optical axis to intercept a minute fraction of the beam issuing from the optical fibre and a measuring instrument (10) to determine the energy of said beam fraction and means (11) for comparing the present measurement with the previous measurement, so as to maximize the measured value following successive positionings of the fibre end centering device.

6. Apparatus in accordance with claim 2, wherein the input ends of said different lengths of optical fibre sections are arranged in a stationary bundle (13) at the focal point of said coupling lens (5), and said actuation device (6) comprises a displaceable optical block (14) provided between the output end of each optical fibre and said total reflection mirror (7) in such a way as to couple a chosen one among said optical fibre sections.

7. Apparatus in accordance with claim 6, wherein said total reflection mirror (7) is spherical and concave.

8. Apparatus in accordance with any one of the preceding claims, wherein said optical shutter (2) capable of inducing a Q-switching mode can be removed from the optical path to get the laser to operate in a free-running mode.

9. Apparatus in accordance with any one of the preceding claims, wherein said optical shutter (2) capable of inducing a Q-switching mode is of the passive type and associated with a lens (3) arranged between it and the active medium to vary the energy density per unit are of the surface of said shutter.

10. Apparatus in accordance with any one of the preceding claims, wherein said optical shutter (2) of the passive type is constituted by an LiF:F₂⁻ crystal.

11. Apparatus in accordance with any one of the preceding claims, wherein it constitute the oscillator component of an amplifier-oscillator system whose amplifier component is another laser system.

12. Apparatus in accordance with any one of the preceding claims, wherein it comprises a coupling into an optical fibre cable at the output side.

## Patentansprüche

1. Vorrichtung zur Erzeugung von Laserimpulsen, enthaltend einen optischen Raum, der von zwei Spiegeln begrenzt ist, wobei einer der Spiegel ein Totalreflexionsspiegel (7) und der andere ein Teilreflexionsspiegel (1) ist, und ein aktives Medium (4) enthält, vervollständigt mit einem geeigneten Anregungssystem, einem optischen Verschluss (2), der geeignet ist, einen Q-Schaltungsmodus zu induzieren, der zwischen dem Totalreflexionsspiegel und dem aktiven Medium vorgesehen ist, **dadurch gekennzeichnet, dass** eine Mehrzahl von Optikfaserabschnitten (F₁, F₂ ... Fₙ) von verschiedenen Längen zum optischen Koppeln des aktiven Mediums (4) mit dem Totalreflexionsspiegel (7) vorgesehen sind, wobei ferner eine Betätigungsvorrichtung (6) zum selektiven Vertauschen der Faserlängen in dem optischen Pfad vorgesehen ist, so dass die Länge des Laserraums ausgewählt werden kann, wenn der Laser im Q-Schaltungsmodus arbeitet, was konsequenterweise auch die Länge der Laserimpulse variiert.

2. Vorrichtung nach Anspruch 1, wobei die Optikfasersektionen Ausgabeenden, die vor dem Totalreflexionsspiegel (7) liegen, und Eingabeenden enthalten, die an dem Brennpunkt einer Linse (5) angeordnet sind, was sie mit dem aktiven Medium (4) koppelt.

3. Vorrichtung nach Anspruch 2, wobei die Betätigungsvorrichtung (6) Einrichtungen (11) zum selektiven Zentrieren von einem der Eingabeenden der Optiktasersektionen an dem Brennpunkt der Kopplungslinse (5) enthält, welche Einrichtungen eine Halterung (8) der Enden enthält, die mit einem motorbetätigten Gestell verbunden ist.

4. Vorrichtung nach Anspruch 3, wobei das motorbetätigte Gestell durch eine Rückkopplungssteuerung (9, 10, 12) betrieben wird.

5. Vorrichtung nach Anspruch 4, wobei die Rückkopplungssteuerung einen Strahlteiler (9) der unter 45° bezüglich der optischen Achse angeordnet ist, um einen winzigen Anteil des Strahls zu unterbrechen, der von der Optikfaser und einem Messinstrument (10) ausgeht, um die Energie des Strahlanteils zu bestimmen, und Einrichtungen (11) zum Vergleichen der gegenwärtigen Messung mit der vorherigen Messung enthält, um dem gemessenen Wert aufeinanderfolgenden Positionierungen der Faserendzentrierungsvorrichtung folgend zu maximieren.

6. Vorrichtung nach Anspruch 2, wobei die Eingabeenden der verschiedenen Längen von Optikfasersektionen in einem stationären Bündel (13) am Brennpunkt der Kopplungslinse (5) angeordnet sind, und die Betätigungsvorrichtung (6) einen versetzbaren Optikblock (14) enthält, der zwischen den Ausgabeenden jeder Optikfaser und dem Totalreflexionsspiegel (7) in einer solchen Weise vorgesehen ist, um eine ausgewählte unter den Optikfasersektionen zu koppeln.

7. Vorrichtung nach Anspruch 6, wobei der Totalreflexionsspiegel (7) sphärisch und konkav ist.

8. Vorrichtung nach einem der vorhergehenden Ansprüche, wobei der optische Verschluss (2), der geeignet ist, um einen Q-Schaltungsmodus zu induzieren, aus dem Optikpfad entfernt werden kann, um den Laser dazu zu bringen, in einem Freilaufmodus zu arbeiten.

9. Vorrichtung nach einem der vorhergehenden Ansprüche, wobei der optische Verschluss (2), der geeignet ist, um einen Q-Schaltungsmodus zu induzieren, vom passiven Typ und mit einer Linse (3) verbunden ist, die zwischen ihm und dem aktiven Medium angeordnet ist, um die Energiedichte pro Einheitsfläche der Oberfläche des Verschlusses zu variieren.

10. Vorrichtung nach einem der vorhergehenden Ansprüche, wobei der optische Verschluß des passiven Typs durch LiF:F₂-Kristalle gebildet ist.

11. Vorrichtung nach einem der vorhergehenden Ansprüche, wobei sie die Oszillatorkomponente eines Verstärker-Oszillator-Systems bildet, dessen Verstärkerkomponente ein anderes Lasersystem ist.

12. Vorrichtung nach einem der vorhergehenden Ansprüche, wobei sie eine Kopplung in ein Optikfaserkabel an der Ausgabeseite enthält.

## Revendications

1. Appareil pour générer des impulsions laser comprenant une cavité optique délimitée par deux miroirs, l'un des miroirs étant un miroir à réflexion totale (7) et l'autre un miroir à réflexion partielle (1), et contenant un milieu actif (4) pourvu d'un système d'excitation approprié, un obturateur optique (2) apte à induire un mode de commutation de Q étant disposé entre ledit miroir à réflexion totale et ledit milieu actif, **caractérisé en ce qu'**une pluralité de portions de fibre optique (F₁, F₂, ..., Fₙ) de différentes longueurs sont prévues pour coupler optiquement ledit milieu actif (4) avec ledit miroir à réflexion totale (7), un dispositif de commande (6) étant en outre prévu pour inter-changer sélectivement lesdites longueurs de fibre dans le chemin optique, de façon que la longueur de la cavité laser puisse être sélectionnée quand le laser fonctionne en mode de commutation de Q, pour en conséquence faire varier également la longueur de l'impulsion laser.

2. Appareil selon la revendication 1, dans lequel lesdites portions de fibre optique comportent des extrémités de sortie situées devant le miroir à réflexion totale (7) et des extrémités d'entrée agencées au point focal d'une lentille (5) les couplant avec ledit milieu actif (4).

3. Appareil selon la revendication 2, dans lequel ledit dispositif de commande (6) comporte des moyens (11) pour centrer sélectivement une des extrémités d'entrée des dites portions de fibre optique au point focal de ladite lentille de couplage (5), lesdits moyens comportant un support (8) des dites extrémités relié à un étage à moteur.

4. Appareil selon la revendication 3, dans lequel ledit étage à moteur est piloté par une commande à réaction (9, 10, 12).

5. Appareil selon la revendication 4, dans lequel ladite commande à réaction comprend un séparateur de faisceau (9) disposé à 45° sur l'axe optique pour intercepter une petite fraction du faisceau émergeant de la fibre optique et un instrument de mesure (10) pour déterminer l'énergie de ladite fraction de faisceau et des moyens (11) pour comparer la présente mesure avec la mesure précédente, de façon à maximaliser la valeur mesurée en fonction des positions successives du dispositif de centrage de l'extrémité de la fibre.

6. Appareil selon la revendication 2, dans lequel les extrémités d'entrée des dites différentes longueurs de portions de fibre optique sont agencées en un faisceau stationnaire (13) au point focal de ladite lentille de couplage (5), et ledit dispositif de commande (6) comprend un bloc optique mobile (14) agencé entre l'extrémité de sortie de chaque fibre optique et ledit miroir à réflexion totale (7) de façon à coupler une portion de fibre optique choisie parmi lesdites portions de fibre optique.

7. Appareil selon la revendication 6, dans lequel ledit miroir à réflexion totale (7) est sphérique et concave.

8. Appareil selon l'une quelconque des revendications précédentes, dans lequel ledit obturateur optique (2) apte à induire un mode de commutation de Q peut être enlevé du chemin optique pour que le laser fonctionne en mode relaxé.

9. Appareil selon l'une quelconque des revendications précédentes, dans lequel ledit obturateur optique (2) apte à induire un mode de commutation de Q est de type passif et associé à une lentille (3) disposée entre lui et le milieu actif pour faire varier la densité d'énergie par unité d'aire de la surface du dit l'obturateur.

10. Appareil selon l'une quelconque des revendications précédentes, dans lequel ledit obturateur optique (2) de type passif est constitué d'un cristal de LiF:F₂.

11. Appareil selon l'une quelconque des revendications précédentes, dans lequel il constitue le composant oscillateur d'un système oscillateur-amplificateur dont le composant amplificateur est un autre système laser.

12. Appareil selon l'une quelconque des revendications précédentes, dans lequel il comprend, du côté de sa sortie, un moyen d'accouplement avec un câble de fibres optiques.
